# EUROPEAN PATENT APPLICATION

(11) **EP 4 432 115 A1**
(43) Date of publication of application: **18.09.2024**
(21) Application number: 23193460.5
(22) Date of filing: 25.08.2023
(51) Int. Cl.: G06F 16/18

(54) **INFORMATION PROCESSING SYSTEM, PROGRAM, AND INFORMATION PROCESSING METHOD**

(30) Priority: 16.03.2023 JP 2023042161
(71) Applicant: FUJIFILM Business Innovation Corp., Minato-ku Tokyo (JP)
(72) Inventor: AMEMIYA, Hiroaki, Yokohama-shi, Kanagawa (JP)
(74) Representative: Kurig, Thomas

(57) **Abstract**

An information processing system includes a processor configured to: receive designation of a specific time point in a past from a user; display a first hierarchical structure that is a hierarchical structure of folders at the specific time point on a display; receive designation of a file or a folder in the first hierarchical structure from the user; and display a location of the received file or folder in a second hierarchical structure that is a current hierarchical structure on the display.

## Description

### BACKGROUND OF THE INVENTION

### (i) Field of the Invention

The present invention relates to an information processing system, a program, and an information processing method.

### (ii) Description of Related Art

A technique is known that manages files and folders using a hierarchical structure.

JP2006-252045A discloses an apparatus that classifies a plurality of electronic files stored in a predetermined classification target region according to predetermined classification conditions and displays the classified electronic files on a display. In addition, information indicating a classification state displayed on the display is stored as display history information in a hard disk.

### SUMMARY OF THE INVENTION

However, in a case in which a hierarchical structure to which a file or a folder belongs has been changed or the file has been moved to another folder, the user may not know the current location of the file.

An object of the present invention is to present a current location of a file to a user even in a case in which a hierarchical structure to which a file or a folder belongs has been changed or the file has been moved to another folder.

According to a first aspect of the present invention, there is provided an information processing system including a processor configured to: receive designation of a specific time point in a past from a user; display a first hierarchical structure that is a hierarchical structure of folders at the specific time point on a display; receive designation of a file or a folder in the first hierarchical structure from the user; and display a location of the received file or folder in a second hierarchical structure that is a current hierarchical structure on the display.

According to a second aspect of the present invention, in the information processing system according to the first aspect of the present invention, the processor may be further configured to display a difference between the first hierarchical structure and the second hierarchical structure on the display.

According to a third aspect of the present invention, in the information processing system according to the first or second aspect of the present invention, the processor may be further configured to restore the file that belongs to the second hierarchical structure and has been designated by the user to a folder in which the designated file was stored in the past.

According to a fourth aspect of the present invention, in the information processing system according to the third aspect of the present invention, the processor may be configured to receive selection of a folder that is a restoration destination from the user in a case in which the folder in which the designated file was stored in the past does not exist.

According to a fifth aspect of the present invention, in the information processing system according to any one of the first to fourth aspects of the present invention, for each file, history information indicating a history of an operation on the file may be associated with the file, and the processor may be configured to specify a location of the file in the second hierarchical structure on the basis of the history information.

According to a sixth aspect of the present invention, there is provided a program causing a computer to execute a process including: receiving designation of a specific time point in a past from a user; displaying a first hierarchical structure that is a hierarchical structure of folders at the specific time point on a display; receiving designation of a file or a folder in the first hierarchical structure from the user; and displaying a location of the received file or folder in a second hierarchical structure that is a current hierarchical structure on the display.

According to a seventh aspect of the present invention, there is provided an information processing method including: receiving designation of a specific time point in a past from a user; displaying a first hierarchical structure that is a hierarchical structure of folders at the specific time point on a display; receiving designation of a file or a folder in the first hierarchical structure from the user; and displaying a location of the received file or folder in a second hierarchical structure that is a current hierarchical structure on the display.

According to the first, fifth, sixth, and seventh aspects of the present invention, even in a case in which the hierarchical structure to which a file or a folder belongs has been changed or the file has been moved to another folder, it is possible to present the current location of the file to the user.

According to the second aspect of the present invention, it is possible to present the user with the difference between the hierarchical structure at a specific time point in the past and the current hierarchical structure.

According to the third aspect of the present invention, in the folder in which the designated file existed in the past, it is possible to operate the designated file.

According to the fourth aspect of the present invention, even in a case in which the folder in which the designated file existed in the past does not exist, it is possible to operate the file in the folder which is the restoration destination selected by the user.

### BRIEF DESCRIPTION OF THE DRAWINGS

Exemplary embodiment(s) of the present invention will be described in detail based on the following figures, wherein:
Fig. 1 is a block diagram showing a hardware configuration of an information processing apparatus according to an exemplary embodiment;
Fig. 2 is a block diagram showing functions of the information processing apparatus according to the exemplary embodiment;
Fig. 3 is a flowchart showing a flow of a process by the information processing apparatus according to the exemplary embodiment;
Fig. 4 is a flowchart showing a flow of another process by the information processing apparatus according to the exemplary embodiment;
Fig. 5 is a diagram showing an example of a folder screen;
Fig. 6 is a diagram showing an example of a selection screen;
Fig. 7 is a diagram showing an example of the display of a hierarchical structure;
Fig. 8 is a diagram showing an example of an operation menu screen;
Fig. 9 is a diagram showing an example of a screen showing a current location of a file;
Fig. 10 is a diagram showing an example of an operation menu screen;
Fig. 11 is a diagram showing an example of a screen showing a current location of a folder;
Fig. 12 is a diagram showing an example of a selection screen;
Fig. 13 is a diagram showing an example of a difference screen;
Fig. 14 is a diagram showing an example of a screen showing a current location of a file;
Fig. 15 is a diagram showing an example of a folder screen;
Fig. 16 is a diagram showing an example of the display of a hierarchical structure;
Fig. 17 is a diagram showing an example of a screen showing a current location of a file.
Fig. 18 is a diagram showing an example of a selection screen;
Fig. 19 is a diagram showing an example of the display of a hierarchical structure;
Fig. 20 is a diagram showing a message displayed when the file does not exist;
Fig. 21 is a diagram showing an example of a folder screen;
Fig. 22 is a diagram showing an example of the display of a hierarchical structure;
Fig. 23 is a diagram showing an example of an operation menu screen;
Fig. 24 is a diagram showing an example of a screen when restoration has been performed;
Fig. 25 is a diagram showing an example of a screen for selecting a restoration destination;
Fig. 26 is a diagram showing an example of a folder screen;
Fig. 27 is a diagram showing an example of a selection screen;
Fig. 28 is a diagram showing an example of a difference screen;
Fig. 29 is a diagram showing an example of a screen showing a current location of a file;
Fig. 30 is a diagram showing an example of a screen when restoration has been performed;
Fig. 31 is a diagram showing an example of a selection screen; and
Fig. 32 is a diagram showing an example of a difference screen.

### DETAILED DESCRIPTION OF THE INVENTION

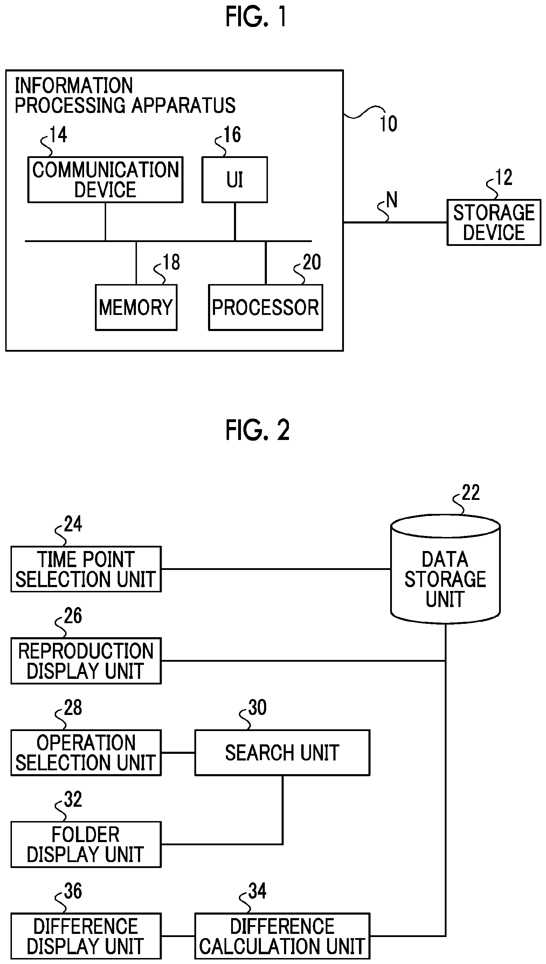

An information processing apparatus 10 according to an exemplary embodiment will be described with reference to Fig. 1. Fig. 1 is a block diagram showing an example of a hardware configuration of the information processing apparatus 10.

The information processing apparatus 10 is, for example, a personal computer (hereinafter, referred to as a "PC"), a tablet PC, a smart phone, a mobile phone, or a server. The information processing apparatus 10 outputs information indicating a location of a file and information indicating a location of a folder. An output destination of the information may be the information processing apparatus 10 or may be an apparatus (for example, a PC operated by a user) other than the information processing apparatus 10. For example, the information processing apparatus 10 displays the location of the file or the location of the folder on a display. The display may be a display included in the information processing apparatus 10 or a display included in another apparatus.

A storage device 12 is a device that stores files and is, for example, a PC, a server, or other devices. The storage device 12 is, for example, a hard disk drive (HDD), a solid state drive (SSD), various types of memories (for example, a RAM, a DRAM, an NVRAM, and a ROM), other storage devices (for example, an optical disk), or combinations thereof.

The information processing apparatus 10 and the storage device 12 have a function of communicating with other apparatuses. The communication may be wireless communication or may be wired communication. For example, the information processing apparatus 10 and the storage device 12 communicate with each other via a communication path N such as the Internet or a local area network (LAN).

The file to be presented in the present exemplary embodiment may be stored in the information processing apparatus 10 or may be stored in the storage device 12. That is, the information processing apparatus 10 may perform a process of presenting the file stored in the information processing apparatus 10 or may perform a process of presenting the file stored in the storage device 12. The information processing apparatus 10 may perform a process of presenting files stored in other apparatuses (that is, apparatuses other than the information processing apparatus 10 and the storage device 12). Similarly, the folder to be presented may be managed by the information processing apparatus 10, may be managed by the storage device 12, or may be managed by other apparatuses. One storage device 12 is shown in Fig. 1. However, the number of storage devices 12 is only an example. The information processing apparatus 10 may perform a process of presenting files stored in each of a plurality of storage devices 12. In addition, the storage device 12 may be included in the information processing apparatus 10.

A file is data or a data set (that is, a data aggregate). For example, the data is document data, image data (for example, still image data or moving image data), graphic data, or audio data. The format of the data is not particularly limited, and any format may be used. The file may be a program (for example, application software or a program that implements an operating system). That is, the file may be, for example, an execution file including commands for performing a certain process.

The folder is a storage location where files are stored and is used to sort and manage the files. In some cases, the folder is referred to as a directory.

The file and the folder are managed by a hierarchical structure. For example, a lower-level folder is stored in a higher-level folder, and a file or a further lower-level folder is stored in the lower-level folder.

File history information is associated with each file. The file history information includes information indicating the content of an operation performed on the file and information indicating the location of the file at each specific time point.

For example, in a case in which a file name has been changed, information indicating a file name before the change and information indicating a file name after the change are included in the file history information.

The information indicating the location of the file at the specific time point is a path or an address indicating the location of the file at the specific time point. The specific time point is a predetermined time point (for example, a weekend, the end of the month, or a specific time in a day). The information indicating the location of the file at the specific time point is included in the file history information. For example, for each specific time point, information indicating a specific time point (for example, information indicating a date or a day and time) and information indicating the location of the file at the specific time point are included in the file history information to be associated with each other. Therefore, the location of the file at each specific time point is specified.

For example, the location of the file is checked at each specific time point, and the information indicating a specific time point and the information indicating the location of the file at the specific time point are included in the file history information to be associated with each other.

For example, the latest location of the file (that is, the location of the file at the time of the last check) is defined as the current location of the file. Information indicating the latest location (for example, a path or an address) is included as information indicating the current location of the file in the file history information of the file. Specifically, information (for example, information indicating the date or the day and time) indicating the time of the check (that is, a specific time point) and information indicating the location of the file at the time of the check are included in the file history information to be associated with each other.

Similarly, at the time of the next check (for example, at the end of the next month), information indicating the time of the next check (that is, the next specific time point) and information indicating the location of the file at the time of the check are included in the file history information to be associated with each other. For example, in a case in which the file is stored in another folder and the location of the file is changed, the changed location is the current location of the file. Information indicating the changed location (for example, a path or an address) is included as the information indicating the current location of the file in the file history information of the file. The information indicating the location included as the information indicating the current location in the file history information at a time point before the check is included as information indicating the location at a specific time point in the past in the file history information. Even in a case in which the location of the file has not been changed, the information indicating the time of the check and the information indicating the location of the file at the time of the check are included in the file history information to be associated with each other.

Similarly, at the time of the next check, the location of the file is checked, and information indicating the time of the check (that is, a specific time point) and information indicating the location of the file at the time of the check are included in the file history information to be associated with each other.

The folder history information is associated with each folder. The folder history information includes information indicating the content of an operation performed on the folder and information indicating the location of the folder at each specific time point.

For example, in a case in which the folder name is changed, information indicating a folder name before the change and information indicating a folder name after the change are included in the folder history information.

The information indicating the location of the folder at a specific time point is a path or an address indicating the location of the folder at the specific time point. Information indicating the location of the folder at each specific time point is included in the folder history information. For example, for each specific time point, information indicating a specific time point (for example, information indicating a date or a day and time) and information indicating the location of the folder at the specific time point are included in the folder history information to be associated with each other. Therefore, the location of the folder at each specific time point is specified.

For example, the location of the folder is checked at each specific time point, and information indicating a specific time point and information indicating the location of the folder at the specific time point are included in the folder history information to be associated with each other.

For example, the latest location of the folder (that is, the location of the folder at the time of the last check) is defined as the current location of the folder. Information indicating the latest location (for example, a path or an address) is included as the information indicating the current location of the folder in the folder history information of the folder. Specifically, information (for example, information indicating a date or a day and time) indicating the time of the check (that is, a specific time point) and information indicating the location of the folder at the time of the check are included in the folder history information to be associated with each other.

Similarly, at the next check (for example, at the end of the next month), information indicating the time of the next check (that is, the next specific time point) and information indicating the location of the folder at the time of the check are included in the folder history information to be associated with each other. For example, in a case in which the folder is stored in another location and the location of the folder is changed, the changed location is the current location of the folder. Information (for example, a path or an address) indicating the changed location is included as the information indicating the current location of the folder in the folder history information of the folder. The information indicating the location included as the information indicating the current location in the folder history information at a time point before the check is included as information indicating the location at a specific time point in the past in the folder history information. Even in a case in which the location of the folder has not been changed, the information indicating the time of the check and the information indicating the location of the folder at the time of the check are included in the folder history information to be associated with each other.

Similarly, at the time of the next check, the location of the folder is checked, and information indicating the time of the check (that is, a specific time point) and information indicating the location of the folder at the time of the check are included in the folder history information to be associated with each other.

In this way, the file history information of each file and the folder history information of each folder are updated. The update may be performed by the information processing apparatus 10, may be performed by an apparatus in which the file is stored (for example, the information processing apparatus 10, the storage device 12, or other apparatuses), or may be performed by an apparatus in which an operation has been performed on the file or the folder.

In addition, management information indicating a hierarchical structure at each specific time point is created. The management information may be stored in the storage device 12, may be stored in the information processing apparatus 10, or may be stored in other apparatuses. The management information indicating the hierarchical structure is created at each specific time point and is stored in, for example, the storage device 12 or the information processing apparatus 10. For example, the management information indicating the hierarchical structure is created at each specific time point on the basis of information indicating the location of each file at a specific time point and information indicating the location of each folder at a specific time point. The management information may be created by the information processing apparatus 10 or may be created by the storage device 12 or other apparatuses.

A hardware configuration of the information processing apparatus 10 will be described below with reference to Fig. 1.

For example, the information processing apparatus 10 includes a communication device 14, a user interface (UI) 16, a memory 18, and a processor 20.

The communication device 14 includes one or more communication interfaces having, for example, a communication chip and a communication circuit and has a function of transmitting information to other apparatuses and a function of receiving information from other apparatuses. The communication device 14 may have a wireless communication function or a wired communication function.

The UI 16 is a user interface and includes a display and an input device. The display is, for example, a liquid crystal display or an EL display. The input device is, for example, a keyboard, a mouse, input keys, or an operation panel. The UI 16 may be a UI such as a touch panel having both the display and the input device.

The memory 18 is a device constituting one or a plurality of storage regions for storing data. The memory 18 is, for example, a hard disk drive (HDD), a solid state drive (SSD), various memories (for example, RAM, DRAM, NVRAM, ROM, and the like), other storage devices (for example, an optical disk or the like), or combinations thereof. The above-described file may be stored in the memory 18. Further, the above-described hierarchical structure may be constructed in the memory 18.

The processor 20 controls the operation of each unit of the information processing apparatus 10.

The processor 20 receives the designation of a specific time point in the past from the user. The user may operate the UI 16 of the information processing apparatus 10 to designate a specific time point in the past or may operate another apparatus (for example, the PC of the user) to designate a specific time point in the past.

The processor 20 displays, on the display, a first hierarchical structure which is a hierarchical structure of folders at the designated specific time point. For example, the processor 20 may represent the hierarchical structure by a tree structure or may represent the hierarchical structure by a list.

For example, the processor 20 acquires management information indicating the hierarchical structure at the designated specific time point from the information processing apparatus 10, the storage device 12, or other apparatuses and displays, on the display, the hierarchical structure indicated by the management information as the first hierarchical structure. As another example, the processor 20 may specify the location of each folder at the designated specific time point with reference to the folder history information of each folder and display the first hierarchical structure of the folders on the basis of the location of each folder.

For example, the processor 20 displays the first hierarchical structure on the display included in the UI 16. In a case in which the user operates another apparatus (for example, the PC of the user) to designate a specific time point in the past, the processor 20 may display the first hierarchical structure on the display of another apparatus.

In addition, the processor 20 receives the designation of a file or a folder in the first hierarchical structure from the user. For example, the user designates a file or a folder in the first hierarchical structure displayed on the display, and the processor 20 receives the designation.

The processor 20 displays the location of the designated file or folder in a second hierarchical structure which is the current hierarchical structure on the display. For example, the processor 20 may represent the hierarchical structure by a tree structure or may represent the hierarchical structure by a list.

In a case in which a file is designated, the processor 20 specifies the current location of the file with reference to the management information indicating the current hierarchical structure and displays the location on the display. As another example, the processor 20 may specify the current location of the file with reference to the file history information of the designated file and display the location on the display.

In a case in which a folder is designated, the processor 20 specifies the current location of the folder with reference to the management information indicating the current hierarchical structure and displays the location on the display. As another example, the processor 20 may specify the current location of the folder with reference to the folder history information of the designated folder and display the location on the display.

The processor 20 may display the location on the display of the UI 16 or may display the location on a display of another apparatus (for example, the PC of the user).

Further, the processor 20 may display a difference between the first hierarchical structure and the second hierarchical structure on the display. The processor 20 represents the difference by a tree structure or a list.

Hereinafter, functionals of the information processing apparatus 10 will be described with reference to Fig. 2. Fig. 2 is a block diagram showing an example of the functions of the information processing apparatus 10.

A data storage unit 22 stores files. A part or all of the data storage unit 22 may be included in the information processing apparatus 10, may be included in the storage device 12, or may be included in other apparatuses.

A time point selection unit 24 selects a specific time point designated by the user. A reproduction display unit 26 reproduces a hierarchical structure at a specific time point and displays the hierarchical structure on the display. An operation selection unit 28 selects a file or a folder designated by the user or selects an operation designated by the user. A search unit 30 searches for the current location of the file or the folder and displays the location on the display. In a case in which two specific time points are designated by the user, a difference calculation unit 34 calculates the difference between the hierarchical structures at the two specific time points. A difference display unit 36 displays the difference on the display. These functions are implemented by the processor 20.

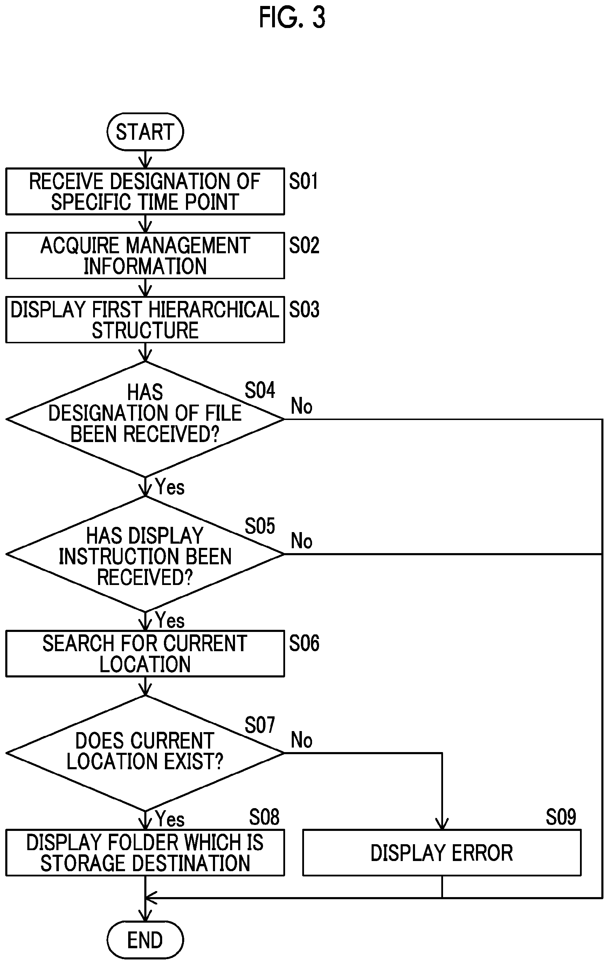

Hereinafter, an example of a process performed by the information processing apparatus 10 will be described with reference to Fig. 3. Fig. 3 is a flowchart showing a flow of the process. Here, for example, it is assumed that the process is performed on the files stored in the data storage unit 22.

First, the processor 20 receives the designation of a specific time point from the user (S01). For example, a specific time point in the past is designated by the user, and the processor 20 receives the designation of the specific time point in the past.

The processor 20 acquires management information of the specific time point (for example, the specific time point in the past) designated by the user from the data storage unit 22 (S02).

The processor 20 displays the hierarchical structure (for example, a tree structure or a list) indicated by the management information as the first hierarchical structure on the display (S03). The file may be included in the first hierarchical structure.

In a case in which the processor 20 has not received the designation of a file in the first hierarchical structure from the user (S04, No), the process ends.

In a case in which the processor 20 receives the designation of a file in the first hierarchical structure from the user (S04, Yes), the process proceeds to Step S05.

In Step S05, in a case in which the processor 20 has not received an instruction to display the current location (S05, No), the process ends.

In a case in which the processor 20 has received the instruction to display the current location in Step S05 (S05, Yes), the processor 20 searches for the current location of the file designated in Step S04 (S06).

In a case in which the designated file exists (for example, in a case in which the file has been stored in the data storage unit 22) (S07, Yes), the processor 20 displays a folder which is a storage destination of the file on the display (S08).

In a case in which the designated file does not exist (for example, in a case in which the file has been deleted) (S07, No), the processor 20 displays information indicating an error on the display (S09). For example, the processor 20 displays information indicating that the designated file has been deleted as the information indicating an error on the display.

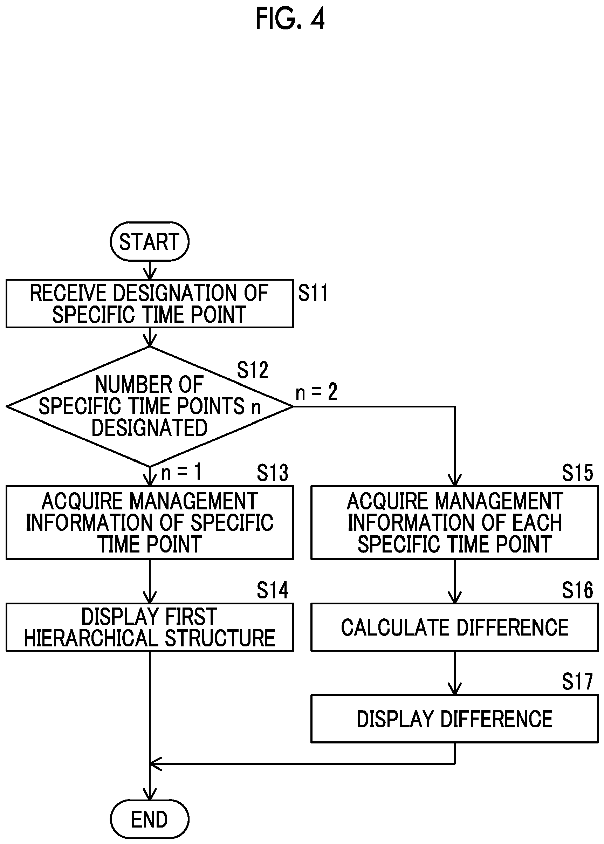

Hereinafter, an example of another process performed by the information processing apparatus 10 will be described with reference to Fig. 4. Fig. 4 is a flowchart showing a flow of the process.

First, the processor 20 receives the designation of a specific time point from the user (S11).

In a case in which the number of specific time points n designated by the user is one (S12, n = 1), the processor 20 acquires the management information of the designated specific time point from the data storage unit 22 (S13). The processor 20 displays the hierarchical structure indicated by the management information as the first hierarchical structure on the display (S14).

In a case in which the number of specific time points n designated by the user is two (S12, n = 2), the processor 20 acquires the management information of each specific time point from the data storage unit 22 (S15). The processor 20 calculates the difference between the hierarchical structures at the two specific time points (S16) and displays the difference on the display (S17).

Hereinafter, examples will be described. In each of the examples described below, it is assumed that a process is performed on the files and the folders stored in the storage device 12. Further, it is assumed that the user operates the UI 16 of the information processing apparatus 10 and each information item is displayed on the display of the UI 16.

### (Example 1)

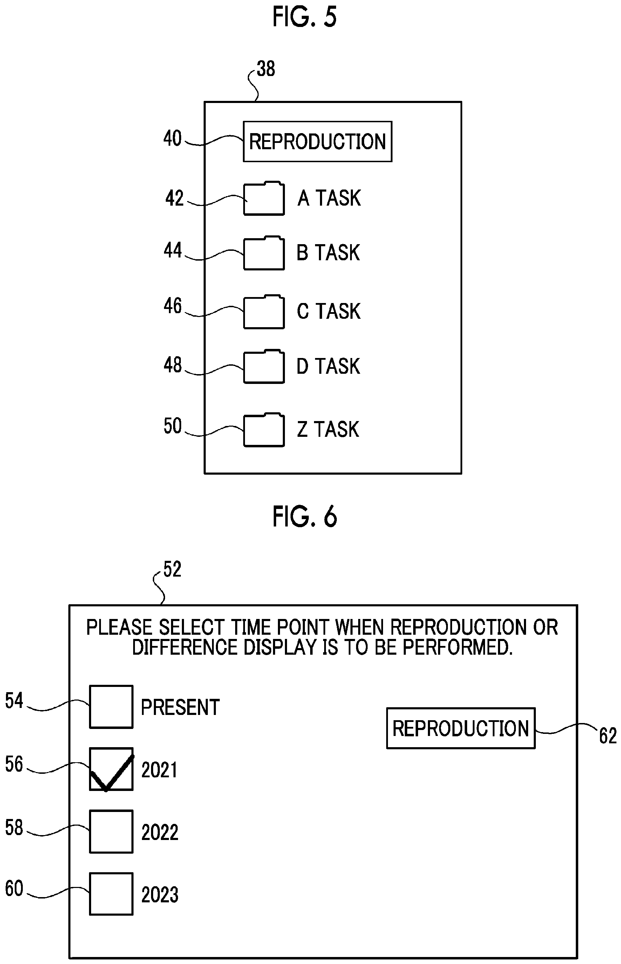

Hereinafter, Example 1 will be described. A folder screen 38 is shown in Fig. 5. The folder screen 38 is a screen showing a list of all or some of the folders that currently exist. This list may be a hierarchical structure of the folders. For example, in a case in which the user operates the UI 16 to input a list display instruction, the processor 20 displays the folder screen 38 on the display of the UI 16 and displays the list of the folders that currently exist on the folder screen 38.

One or more folders that are stored in the folder designated by the user may be displayed on the folder screen 38, or one or more folders that are stored in the top-level folder may be displayed on the folder screen 38.

For example, a reproduction button 40 and icons 42 to 50 are displayed on the folder screen 38. The reproduction button 40 is an image indicating a button for inputting an instruction to reproduce the hierarchical structure. Each of the icons 42 to 50 is an image indicating a folder. Information indicating a folder name is displayed in association with the icon of the folder. For example, the icon 42 is an image indicating a folder for an A task, and information indicating the folder name "A task" is displayed next to the icon 42. The same is applied to other folders.

At present, each of folders "A task", "B task", "C task", "D task", and "Z task" exists. These folders may be folders that are stored in the folder designated by the user or may be folders that are stored in the top-level folder. The same is applied to each example described below.

In a case in which the user presses the reproduction button 40 on the folder screen 38, the processor 20 displays a selection screen 52 shown in Fig. 6 on the display of the UI 16. The selection screen 52 is a screen for selecting a specific time point. A hierarchical structure at a specific time point selected on the selection screen 52 is displayed.

In the example shown in Fig. 6, the specific time point is managed on a yearly basis. The specific time point can be selected on a yearly basis. For example, at present, 2021, 2022, and 2023 correspond to examples of the specific time point, and management information indicating a hierarchical structure in each year is created. For specific time points (that is, 2021, 2022, and 2023) other than the present, a hierarchical structure at a certain day and time (for example, 12:00 on December 31) is specified, and management information indicating the hierarchical structure at the day and time is created for each year and then stored in the storage device 12.

For example, check boxes 54 to 60 and a reproduction button 62 are displayed on the selection screen 52. The check boxes 54 to 60 are images for selecting a specific time point. For example, the check box 54 corresponds to the "present", the check box 56 corresponds to "2021", the check box 58 corresponds to "2022", and the check box 60 corresponds to "2023". The reproduction button 62 is an image indicating a button for inputting an instruction to reproduce the hierarchical structure.

In the example shown in Fig. 6, the check box 56 is selected by the user. That is, "2021" is selected as the specific time point for reproducing the hierarchical structure by the user. In a case in which the reproduction button 62 is pressed in this state, the processor 20 acquires management information indicating the hierarchical structure in 2021 from the storage device 12 and displays the hierarchical structure indicated by the management information on the display. This hierarchical structure corresponds to an example of the first hierarchical structure.

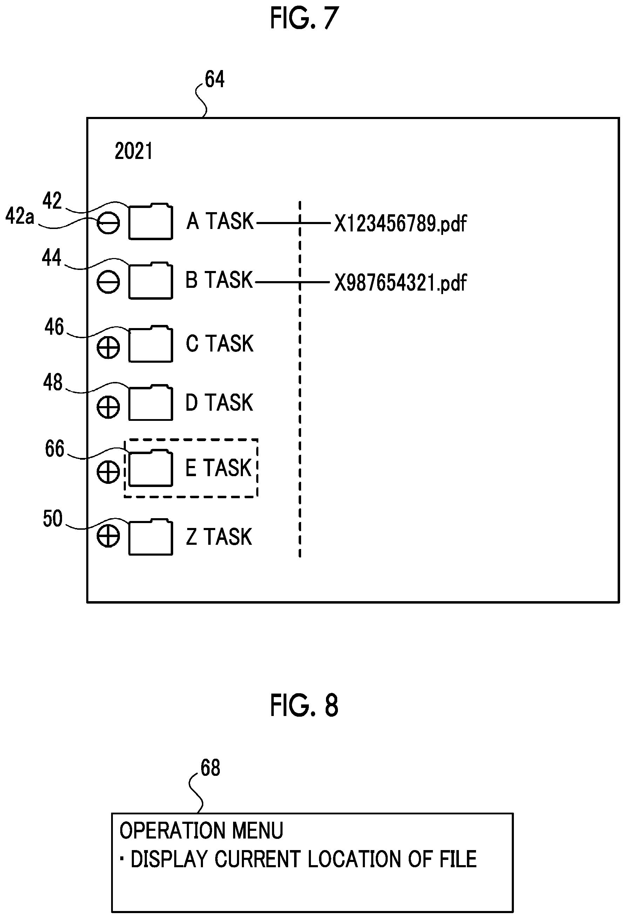

Fig. 7 shows an example of the display of the hierarchical structure in 2021. For example, the processor 20 displays a reproduction screen 64 on the display and displays the hierarchical structure in 2021 on the reproduction screen 64.

At the time point of 2021, each of the folders "A task", "B task", "C task", "D task", "E task", and "Z task" existed. In a case in which the current hierarchical structure shown in Fig. 5 is compared with the hierarchical structure at the time point of 2021, the folder "E task" existed at the time point of 2021, but does not exist at the present time. Therefore, the icon 66 indicating the folder "E task" is displayed on the reproduction screen 64.

In addition, a file "X123456789.pdf" is stored in the folder "A task". A file "X987654321.pdf" is stored in the folder "B task".

For example, a button 42a is displayed next to the icon 42 indicating the folder "Atask". In a case in which the button 42a is pressed by the user (for example, in a case in which the button 42a is clicked or touched), the processor 20 displays a list of files stored in the folder "A task" on the reproduction screen 64. In a case in which the button 42a is pressed in a state in which the list of the files is displayed, the processor 20 does not display the list on the reproduction screen 64. The same is applied to folders other than the folder "A task".

In a case in which a file or a folder is designated by the user on the reproduction screen 64, the processor 20 displays a screen for selecting an operation on the designated file or folder (hereinafter, referred to as an "operation menu screen") on the display.

For example, in a case in which the file "X123456789.pdf" and the file "X987654321.pdf" are designated by the user, the processor 20 displays the operation menu screen for selecting an operation on these files on the display.

Fig. 8 shows an operation menu screen 68. An operation of "displaying the current location of the file" is displayed on the operation menu screen 68. This operation is an operation of displaying the current location of the file designated on the reproduction screen 64.

In a case in which the operation of "displaying the current location of the file" is designated by the user on the operation menu screen 68, the processor 20 specifies the current location of the file with reference to the file history information of the designated file "X123456789.pdf". For example, the processor 20 specifies the current location of the file on the basis of the path or the address included in the file history information. The processor 20 displays the specified location on the display. The same is applied to the file "X987654321.pdf". For example, the processor 20 displays the folder in which the file is stored on the display.

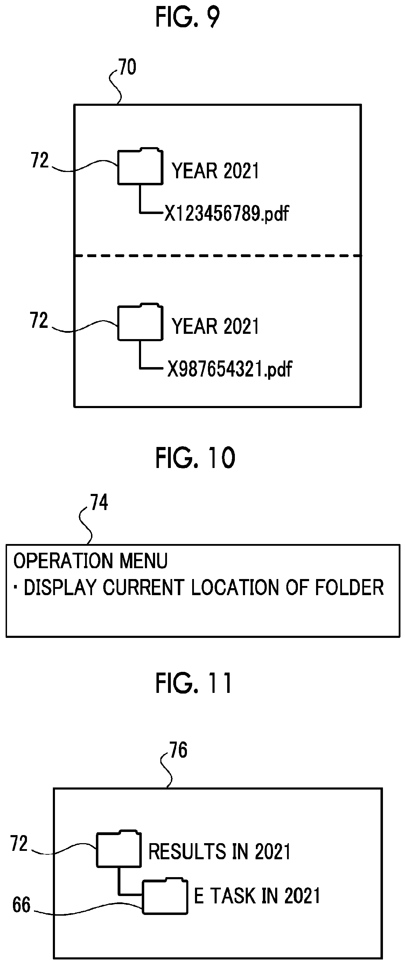

Fig. 9 shows an example of the display. A screen 70 is shown in Fig. 9. The screen 70 is a screen showing a folder in which the file designated on the reproduction screen 64 is currently stored. In a case in which the operation of "displaying the current location of the file" is designated on the operation menu screen 68, the processor 20 displays the screen 70 on the display.

The file "X123456789.pdf" is currently stored in a folder "results in 2021". Therefore, the processor 20 displays an icon 72 indicating the folder "results in 2021" on the screen 70. In addition, the processor 20 displays a tree structure including the file "X123456789.pdf" and the folder "results in 2021" (a structure indicating that the file "X123456789.pdf" is stored in the folder "results in 2021") on the screen 70. Similarly, for the file "X987654321.pdf", a folder "Results in 2021" in which the file "X987654321.pdf" is stored is displayed.

In a case in which the folder "E task" is designated by the user on the reproduction screen 64 shown in Fig. 7, the processor 20 displays an operation menu screen for selecting an operation on this folder on the display.

Fig. 10 shows an operation menu screen 74. The operation of "displaying the current location of the folder" is displayed on the operation menu screen 74. This operation is an operation of displaying the current location of the folder designated on the reproduction screen 64.

In a case in which the operation of "displaying the current location of the folder" is designated by the user on the operation menu screen 74, the processor 20 specifies the current location of the folder with reference to the folder history information of the designated file "E task". For example, the processor 20 specifies the current location of the folder on the basis of the path or the address included in the folder history information. The processor 20 displays the specified location on the display.

Fig. 11 shows an example of the display. A screen 76 is shown in Fig. 11. The screen 76 is a screen showing the current location of the folder designated on the reproduction screen 64. In a case in which the operation of "displaying the current location of the folder" is designated on the operation menu screen 74, the processor 20 displays the screen 76 on the display.

The folder "E task" is currently stored in the folder "results in 2021". Therefore, the processor 20 displays the icon 72 indicating the folder "results in 2021" on the screen 76. Further, the processor 20 displays a tree structure including the folder "E task" and the folder "results in 2021" (a structure indicating that the folder "E task" is stored in the folder "results in 2021") on the screen 76.

In the example shown in Fig. 11, the name of the folder "E-task" is changed to "E task in 2021". In this case, the processor 20 displays the changed name "E task in 2021" on the screen 76. Since information indicating the changed name "E task in 2021" is included in the folder history information of the folder "E task", the processor 20 specifies the changed name with reference to the folder history information and displays the changed name on the screen 76.

### (Example 2)

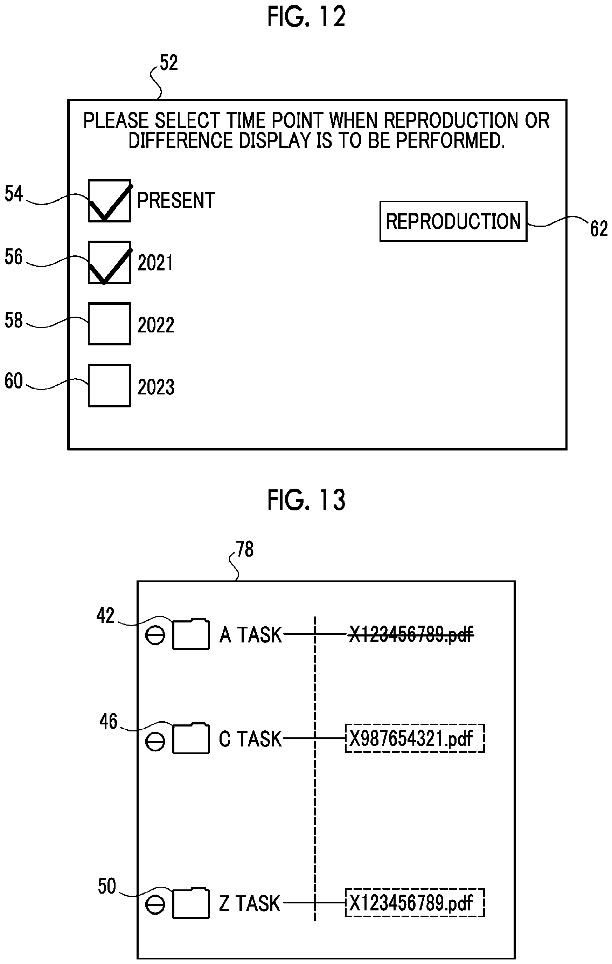

Hereinafter, Example 2 will be described. Fig. 12 shows the selection screen 52. For example, in a case in which the reproduction button 40 is pressed on the folder screen 38 shown in Fig. 5, the processor 20 displays the selection screen 52 on the display.

In the example shown in Fig. 12, two check boxes (for example, the check boxes 54 and 56) are selected by the user. That is, the "present" and "2021" are selected as specific time points by the user. In a case in which the reproduction button 62 is pressed in this state, the processor 20 acquires management information indicating the current hierarchical structure and management information indicating the hierarchical structure in 2021 from the storage device 12 and calculates the difference between the current hierarchical structure and the hierarchical structure in 2021. The processor 20 displays the calculated difference on the display.

The time point that serves as a reference for the difference is the earlier of the two specific time points. In the above example, since 2021 is a time point earlier than the present, the processor 20 calculates the difference between the hierarchical structure in 2021 and the current hierarchical structure on the basis of 2021. Of course, the processor 20 may calculate the difference using a later specific time point as the reference. Further, the user may select a reference time point from the two specific time points.

Fig. 13 shows an example of the display of the difference. For example, the processor 20 displays a difference screen 78 on the display and displays the difference between the current hierarchical structure and the hierarchical structure in 2021 on the difference screen 78. The difference has a hierarchical structure.

The processor 20 displays a file name indicating a deleted file, a file name indicating a moved file, a folder name indicating a deleted folder, and a folder name indicating a moved folder to be distinguished from the other files and folders. For example, the processor 20 displays the file name indicating the deleted file, the file name indicating the moved file, the folder name indicating the deleted folder, and the folder name indicating the moved folder in a specific color (for example, red) or with diagonal lines.

In the example shown in Fig. 13, the file "X123456789.pdf" was stored in the folder "A task" at the stage of 2021, but is not stored in the folder "A task" at present. Therefore, the processor 20 draws a diagonal line on the file name of the file "X123456789.pdf".

The processor 20 displays a file name indicating an added file and a folder name indicating an added folder to be distinguished from the other files and folders. For example, the processor 20 displays the file name indicating the added file and the folder name indicating the added folder in a second specific color (for example, blue).

In the example shown in Fig. 13, the file "X987654321.pdf" was not stored in the folder "C task" at the stage of 2021, but is stored in the folder "C task" at present. Therefore, the processor 20 displays the file name of the file "X987654321.pdf" in the second specific color (for example, blue). The second specific color is a color different from the first specific color. In Fig. 13, for convenience of description, the file name of the file "X987654321.pdf" is surrounded by a broken line to represent that the file name is displayed in the second specific color.

Further, the file "X123456789.pdf" was not stored in the folder "Z task" at the stage of 2021, but is stored in the folder "Z task" at present. Therefore, the processor 20 displays the file name of the file "X123456789.pdf" in the second specific color (for example, blue) (see the broken line in Fig. 13).

In a case in which a file or a folder is designated by the user on the difference screen 78, the processor 20 displays an operation menu screen for selecting an operation on the designated file or folder on the display. In a case in which a file is designated, the operation menu screen 68 shown in Fig. 8 is displayed. In a case in which a folder is designated, the operation menu screen 74 shown in Fig. 10 is displayed.

For example, in a case in which the file "X123456789.pdf" displayed as the deleted file is designated by the user on the difference screen 78, the processor 20 displays the operation menu screen 68 (see Fig. 8) for the file on the display.

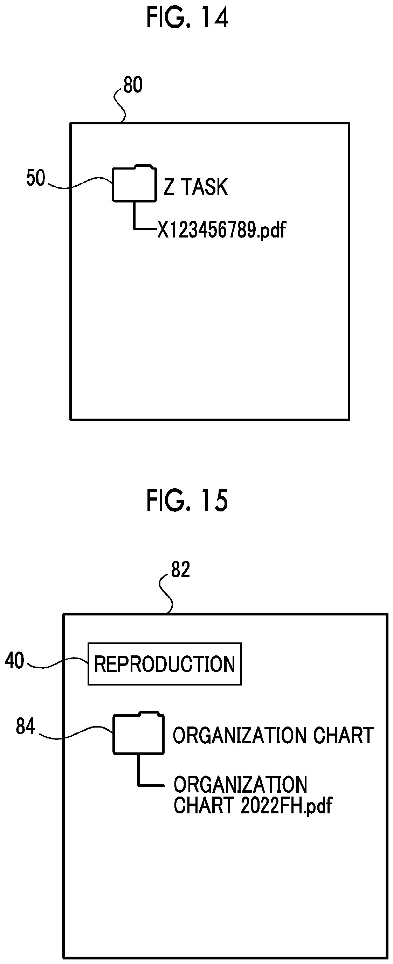

In a case in which the operation of "displaying the current location of the file" is designated on the operation menu screen 68, the processor 20 displays a screen 80 shown in Fig. 14 on the display. The screen 80 is a screen indicating a folder in which the file designated on the difference screen 78 is currently stored.

The file "X123456789.pdf" is currently stored in the folder "Z task". Therefore, the processor 20 displays the icon 50 indicating the folder "Z task" on the screen 80. Further, the processor 20 displays a tree structure including the file "X123456789.pdf" and the folder "Z task" (a structure indicating that the file "X123456789.pdf" is stored in the folder "Z task") on the screen 80.

In a case in which a folder is designated on the difference screen 78, the operation menu screen 74 is displayed. In a case in which the operation of "displaying the current location of the folder" is designated on the operation menu screen 74, the processor 20 displays the current location of the folder designated on the difference screen 78 on the display.

### (Example 3)

Hereinafter, Example 3 will be described. A folder screen 82 is shown in Fig. 15. The folder screen 82 is a screen showing a list of folders that currently exist. For example, in a case in which the user operates the UI 16 to input a list display instruction, the processor 20 displays the folder screen 82 on the display of the UI 16 and displays the list of the folders that currently exist on the folder screen 82.

For example, the reproduction button 40 and an icon 84 are displayed on the folder screen 82. At present, a folder "organization chart" exists, and a file "organization chart 2022FH.pdf" is stored in the folder "organization chart".

For example, it is assumed that the user wants to check the file (for example, a file "organization chart in 2021") stored in the folder "organization chart" two years ago (for example, 2021), but does not know the current location of the file and wants to know the current location.

In a case in which the user presses the reproduction button 40 on the folder screen 82, the processor 20 displays the selection screen 52 shown in Fig. 6 on the display of the UI 16.

In the example shown in Fig. 6, the check box 56 corresponding to "2021" is selected by the user. In a case in which the reproduction button 62 is pressed in this state, the processor 20 acquires management information indicating the hierarchical structure in 2021 from the storage device 12 and displays the hierarchical structure indicated by the management information on the display.

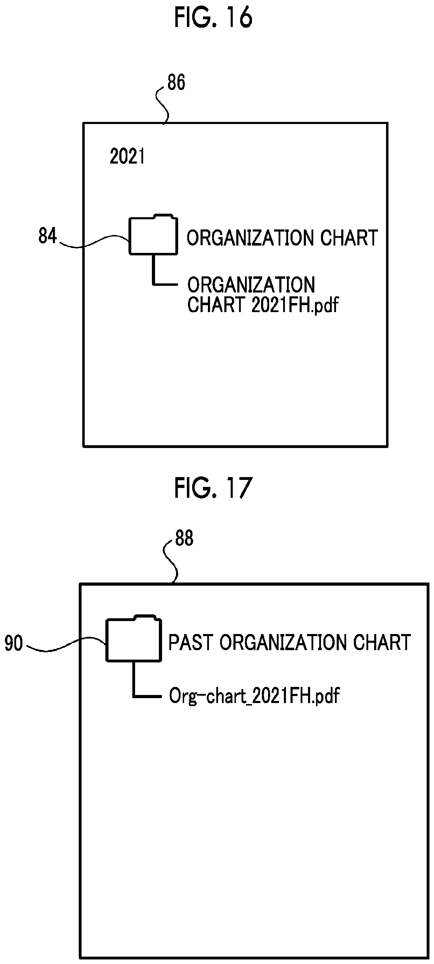

Fig. 16 shows an example of the display of the hierarchical structure in 2021. For example, the processor 20 displays a reproduction screen 86 on the display and displays the hierarchical structure in 2021 on the reproduction screen 86.

At the time of 2021, the folder "organization chart" exists, and the file "organization chart 2021FH.Pdf" is stored in the folder "organization chart". The file "organization chart 2021FH.pdf" is a file indicating an "organization chart in 2021" and is a file that the user wants to check.

In a case in which the file "organization chart 2021FH.Pdf" is designated by the user on the reproduction screen 86, the processor 20 displays the operation menu screen 68 for the file on the display as shown in Fig. 8.

In a case in which the operation of "displaying the current location of the file" is designated by the user on the operation menu screen 68, the processor 20 specifies the current location of the file with reference to the file history information of the designated file "organization chart 2021FH.pdf".

Fig. 17 shows an example of the display. A screen 88 is shown in Fig. 17. The screen 88 is a screen showing a folder in which the file designated on the reproduction screen 86 is currently stored. In a case in which the operation of "displaying the current location of the file" is designated on the operation menu screen 68, the processor 20 displays the screen 88 on the display.

The file name of the file "organization chart 2021FH.pdf" has been changed to a file name "Org-chart_2021FH.pdf", and the file "organization chart 2021FH.pdf" is currently stored in a folder "past organization chart". The processor 20 displays an icon 90 indicating the folder "past organization chart" on the screen 88. In addition, the processor 20 displays a tree structure including the file "Org-chart_2021FH.pdf" and the folder "past organization chart" (a structure indicating that the file "Org-chart_2021FH.pdf" is stored in the folder "past organization chart") on the screen 88.

According to the above-described process, even in a case in which the location of the file has been changed due to, for example, a change in the organization or a change in file classification over time, the current location of the file is presented to the user. In the above-described example, in a case in which the user wants to check the file of the organization chart in 2021, but does not know the current location of the file, the current location of the file is presented to the user.

### (Example 4)

Hereinafter, Example 4 will be described. For example, it is assumed that the user wants to check the file (for example, a file "organization chart in 2020") stored in the folder "organization chart" three years ago (for example, 2020), but does not know the current location of the file and wants to know the current location.

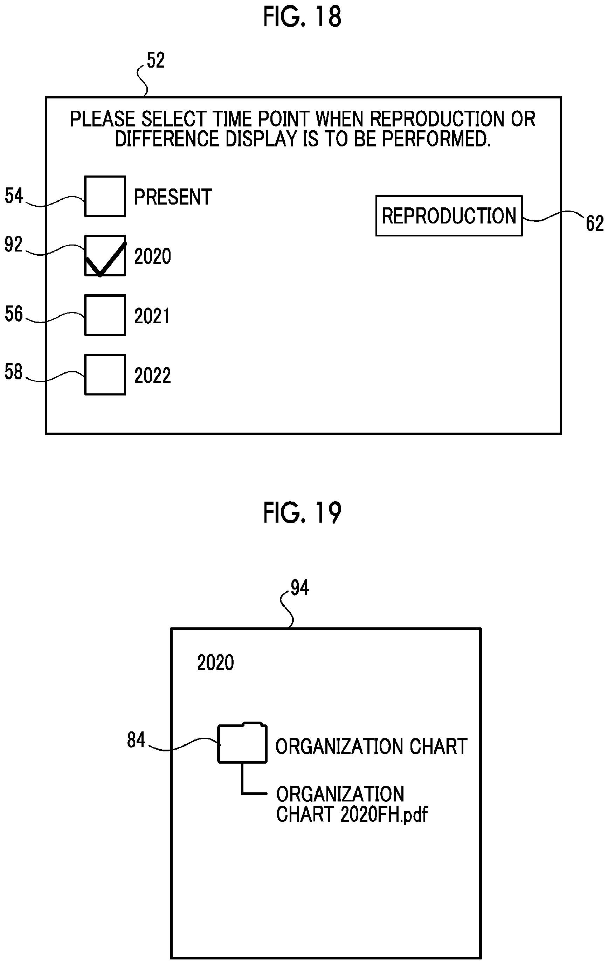

As shown in Fig. 15, the folder screen 82 is displayed on the display. In a case in which the reproduction button 40 is pressed, the processor 20 displays the selection screen 52 on the display as shown in Fig. 18.

In the example shown in Fig. 18, a check box 92 corresponding to "2020" is selected by the user. In a case in which the reproduction button 62 is pressed in this state, the processor 20 acquires management information indicating the hierarchical structure in 2020 from the storage device 12 and displays the hierarchical structure indicated by the management information on the display.

Fig. 19 shows an example of the display of the hierarchical structure in 2020. For example, the processor 20 displays a reproduction screen 94 on the display and displays the hierarchical structure in 2020 on the reproduction screen 94.

At the time of 2020, a folder "organization chart" exists, and a file "organization chart 2020FH.pdf" is stored in the folder "organization chart".

In a case in which the file "organization chart 2020FH.pdf" is designated by the user on the reproduction screen 94, the processor 20 displays the operation menu screen 68 for the file on the display as shown in Fig. 8.

In a case in which the operation of "displaying the current location of the file" is designated by the user on the operation menu screen 68, the processor 20 specifies the current location of the file with reference to the file history information of the designated file "organization chart 2020FH.pdf".

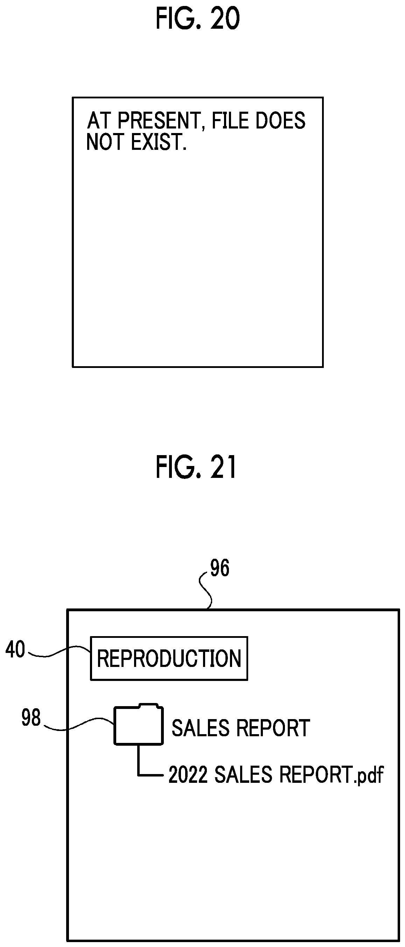

In Example 4, the file "organization chart 2020FH.pdf" has been deleted or moved to an unknown location. In this case, as shown in Fig. 20, the processor 20 displays, for example, a message "the file does not currently exist." on the display.

According to the above-described process, in a case in which the location of the file is unknown due to, for example, a change in the organization or a change in file classification over time, the user is presented with the fact that the location of the file is unknown.

### (Example 5)

Hereinafter, Example 5 will be described. A folder screen 96 is shown in Fig. 21. The folder screen 96 is a screen showing a list of folders that currently exist. For example, in a case in which the user operates the UI 16 to input a list display instruction, the processor 20 displays the folder screen 96 on the display of the UI 16 and displays the list of the folders that currently exist on the folder screen 96.

For example, the reproduction button 40 and an icon 98 are displayed on the folder screen 96. At present, a folder "sales report" exists, and a file "2022 sales report.pdf" is stored in the folder "sales report".

For example, it is assumed that the user wants to check the sales report of last year (for example, 2021), but does not know the location of the file of the sales report of last year, and wants to know the current location. In addition, it is assumed that the user is aware that the file was stored in a specific folder in the past.

In a case in which the user presses the reproduction button 40 on the folder screen 96, the processor 20 displays the selection screen 52 shown in Fig. 6 on the display of the UI 16.

In the example shown in Fig. 6, the check box 56 corresponding to "2021" is selected by the user. In a case in which the reproduction button 62 is pressed in this state, the processor 20 acquires management information indicating the hierarchical structure in 2021 from the storage device 12 and displays the hierarchical structure indicated by the management information on the display.

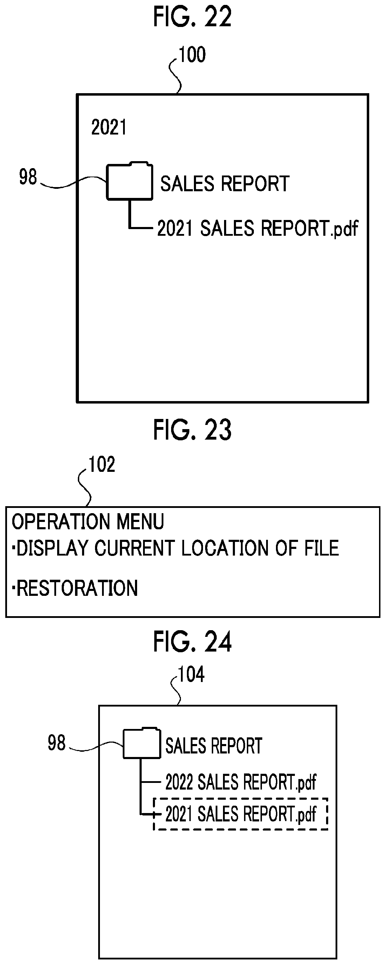

Fig. 22 shows an example of the display of the hierarchical structure in 2021. For example, the processor 20 displays a reproduction screen 100 on the display and displays the hierarchical structure in 2021 on the reproduction screen 100.

At the time of 2021, a folder "sales report" exists, and a file "2021 sales report.pdf" is stored in the folder "sales report".

In a case in which the file "2021 sales report.pdf" is designated by the user on the reproduction screen 100, the processor 20 displays the operation menu screen for the file on the display.

Fig. 23 shows an operation menu screen 102. An operation A of "displaying the current location of the file" and an operation B of "restoration" are displayed on the operation menu screen 102. The operation A is an operation of displaying the current location of the file designated on the reproduction screen 100. The operation B is an operation of restoring the designated file to the folder stored in the past.

In a case in which the operation A of "displaying the current location of the file" is designated by the user on the operation menu screen 102, the processor 20 specifies the current location of the file with reference to the file history information of the designated file "2021 sales report.pdf". As in each of the above-described examples, the processor 20 displays a hierarchical structure (for example, a tree structure) composed of files and folders on the display.

In a case in which the operation B of "restoration" is designated by the user on the operation menu screen 102, the processor 20 restores the file to the folder in which the file was stored in the past with reference to the file history information of the designated file "2021 sales report.pdf". Restoration means storing the file in the folder in which the file was stored in the past. The processor 20 may display the folder in which the file was stored in the past on the display and may store the file in the folder in a case in which the user inputs a restoration instruction. In a case in which the file has been restored to the folder in which the file was stored in the past, the file may or may not be deleted from the folder in which the file is currently stored.

Fig. 24 shows an example of the display when the restoration has been performed. A screen 104 is shown in Fig. 24. The file "2021 sales report.pdf" is not currently stored in the folder "sales report", but was stored in the folder "sales report" in the past. In this case, the processor 20 restores the file "2021 sales report.pdf" to the folder "sales report". That is, the processor 20 stores the file "2021 sales report.pdf" in the folder "sales report". The processor 20 may store the file "2021 sales report.pdf" in the folder "sales report" without any instruction from the user. As another example, in a case in which the user gives a storage instruction after the screen 104 is displayed, the processor 20 may store the file "2021 sales report.pdf" in the folder "sales report".

In a case in which the folder in which the designated file was stored in the past does not exist, the processor 20 may receive the selection of a folder which is a restoration destination from the user and restore the file to the selected folder.

For example, in a case in which the folder in which the file "2021 sales report.pdf" was stored in the past does not exist, the processor 20 displays a screen for selecting a restoration destination on the display.

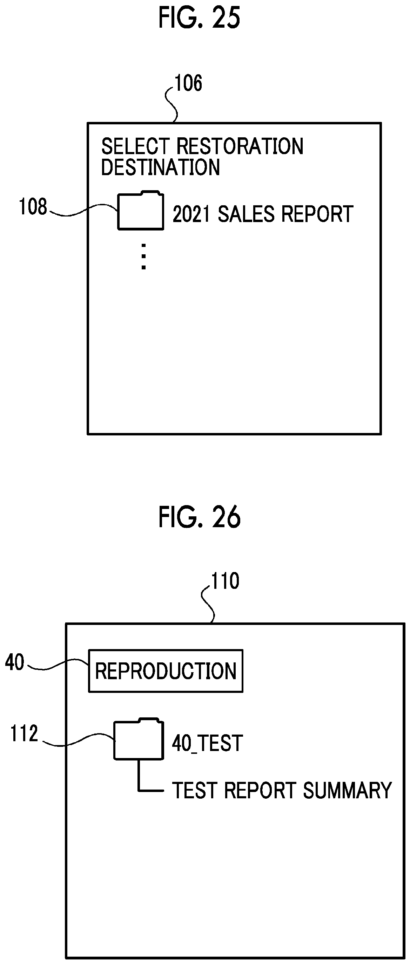

Fig. 25 shows a selection screen 106. The selection screen 106 is a screen for selecting a restoration destination. A list of folders that are candidates for the restoration destination is displayed on the selection screen 106.

For example, the processor 20 displays a list of folders that are presumed to be related to the file "2021 sales report.pdf" designated by the user on the selection screen 106. The file designated by the user is a file related to the sales report in 2021. In this case, the processor 20 displays, on the selection screen 106, a folder that is related to 2021 (for example, a folder having a character string "2021" in a folder name) or a folder that is related to the sales report in 2021 (for example, a folder having a character string "2021 sales report" in a folder name) as the folders presumed to be related to the file designated by the user. As another example, the processor 20 may display a list of all of the folders managed by the storage device 12 on the selection screen 106 or display a list of the folders related to the year designated by the user on the selection screen 106. In a case in which a search key is input by the user and a folder is searched on the basis of the search key, the processor 20 may display a list of the searched folders on the selection screen 106. In the example shown in Fig. 25, for example, an icon 108 indicating the folder "2021 sales report" is displayed on the selection screen 106.

In a case in which the user selects a folder on the selection screen 106, the processor 20 restores the file "2021 sales report.pdf" to the selected folder.

According to the above-described process, the file designated by the user is stored in the folder in which the file was stored in the past and is presented to the user.

### (Example 6)

Hereinafter, Example 6 will be described. A folder screen 110 is shown in Fig. 26. The folder screen 110 is a screen showing a list of folders that currently exists. For example, in a case in which the user operates the UI 16 to input a list display instruction, the processor 20 displays the folder screen 110 on the display of the UI 16 and displays the list of the folders that currently exist on the folder screen 110.

For example, the reproduction button 40 and an icon 112 are displayed on the folder screen 110. At present, a folder "40_test" exists, and a file "test report summary" is stored in the folder "40_test".

For example, it is assumed that the user wants to check the outcome of a test work from December 2022 to the present.

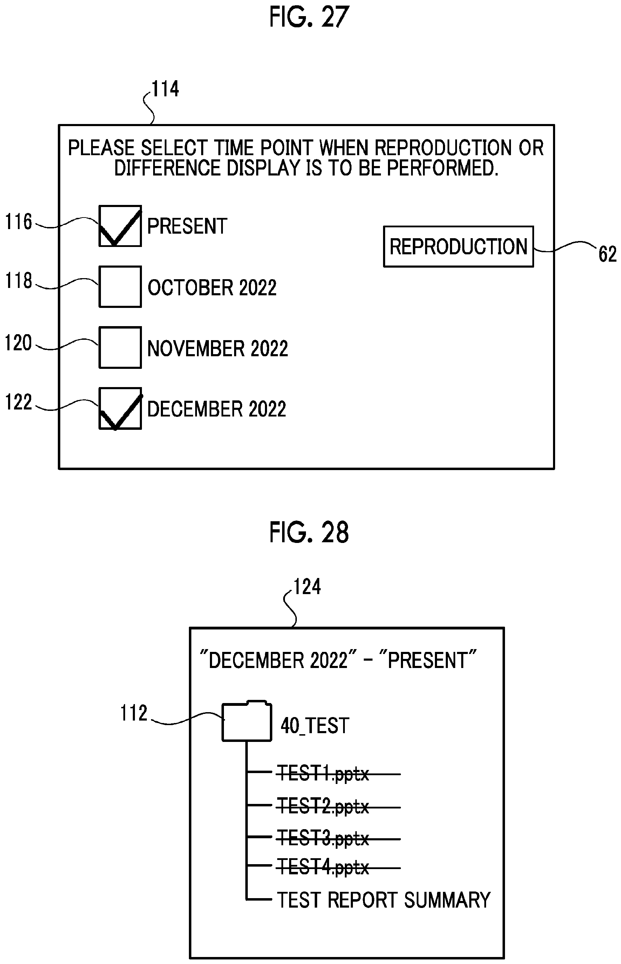

In a case in which the user presses the reproduction button 40 on the folder screen 110, the processor 20 displays a selection screen 114 shown in Fig. 27 on the display of the UI 16. The selection screen 114 is a screen for selecting a specific time point. A hierarchical structure at a specific time point selected on the selection screen 114 is displayed.

In the example shown in Fig. 27, the specific time point is managed on a monthly basis. The specific time point can be selected on a monthly basis. For example, at present, October 2022, November 2022, and December 2022 correspond to examples of the specific time point, and management information indicating the hierarchical structure in each month is created. For specific time points (that is, October 2022, November 2022, and December 2022) other than the present, a hierarchical structure at a certain day and time (for example, the end of the month) is specified, and management information indicating the hierarchical structure at the day and time is created for each month and stored in the storage device 12.

For example, check boxes 116 to 122 and the reproduction button 62 are displayed on the selection screen 114. The check boxes 116 to 122 are images for selecting a specific time point. For example, the check box 116 corresponds to the "present", the check box 118 corresponds to "October 2022", the check box 120 corresponds to "November 2022", and the check box 122 corresponds to "December 2022".

In the example shown in Fig. 27, the check boxes 116 and 122 are selected by the user. That is, the "present" and "December 2022" are selected as the specific time points by the user. In a case in which the reproduction button 62 is pressed in this state, the processor 20 acquires management information indicating the current hierarchical structure and management information indicating a hierarchical structure in December 2022 from the storage device 12 and calculates the difference between the current hierarchical structure and the hierarchical structure in December 2022. The processor 20 displays the calculated difference on the display.

Fig. 28 shows an example of the display of the difference. For example, the processor 20 displays a difference screen 124 on the display and displays the difference between the current hierarchical structure and the hierarchical structure in December 2022 on the difference screen 124. The difference has a hierarchical structure.

A file "test1.ppxt", a file "test2.ppxt", a file "test3.ppxt", and a file "test4.ppxt" have been deleted from the folder "40_test" or moved to another folder between December 2022 and the present. The file "test report summary" is stored in the folder "40_test" between December 2022 and the present.

For example, in a case in which the user designates the file "test1.pptx" on the difference screen 124, the processor 20 displays the operation menu screen 102 for the file on the display as shown in Fig. 23.

In a case in which the operation A of "displaying the current location of the file" is designated by the user on the operation menu screen 102, the processor 20 specifies the current location of the file with reference to the file history information of the designated file "test1.pptx".

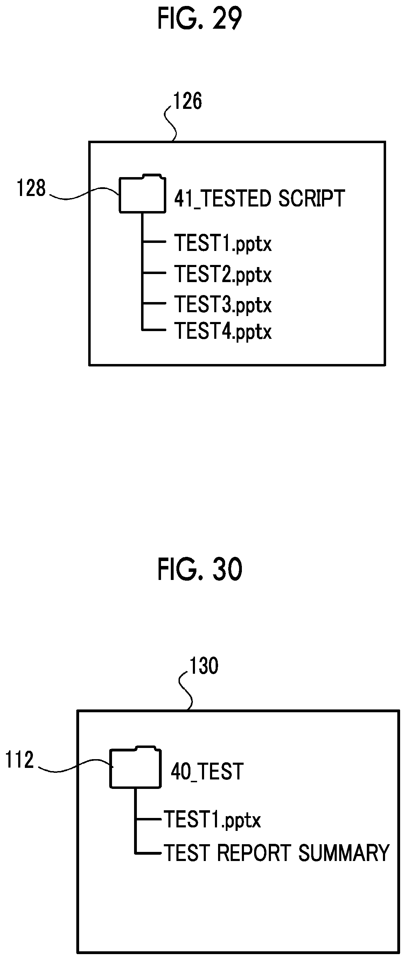

Fig. 29 shows an example of the display. A screen 126 is shown in Fig. 29. In a case in which the operation A of "displaying the current location of the file" is designated on the operation menu screen 102, the processor 20 displays the screen 126 on the display.

The file "test1.pptx" is currently stored in a folder "41_tested script". Therefore, the processor 20 displays an icon 128 indicating the folder "41_tested script" on the screen 126. The file "test1.ppxt", the file "test2.ppxt", the file "test3.ppxt", and the file "test4.ppxt" are currently stored in the folder "41_tested script". The processor 20 displays a tree structure including the file "test1.ppxt", the file "test2.ppxt", the file "test3.ppxt", the file "test4.ppxt", and the folder "41_tested script" on the screen 126.

In a case in which the operation B of "restoration" is designated by the user on the operation menu screen 102, the processor 20 restores the file to the folder in which the file was stored in the past with reference to the file history information of the designated file "test1.pptx".

Fig. 30 shows an example of the display when the restoration has been performed. A screen 130 is shown in Fig. 30. The file "test1.pptx" is not currently stored in the folder "40_test", but was stored in the folder "40_test" in the past. In this case, the processor 20 restores the file "test1.pptx" to the folder "40_test". That is, the processor 20 stores the file "test1.pptx" in the folder "40_test".

In a case in which the folder in which the designated file was stored in the past does not exist, the processor 20 may receive the selection of a folder which is a restoration destination from the user and restore the file to the selected folder.

### (Example 7)

Hereinafter, Example 7 will be described. For example, it is assumed that the user wants to check the outcome of a test operation from October to December 2022.

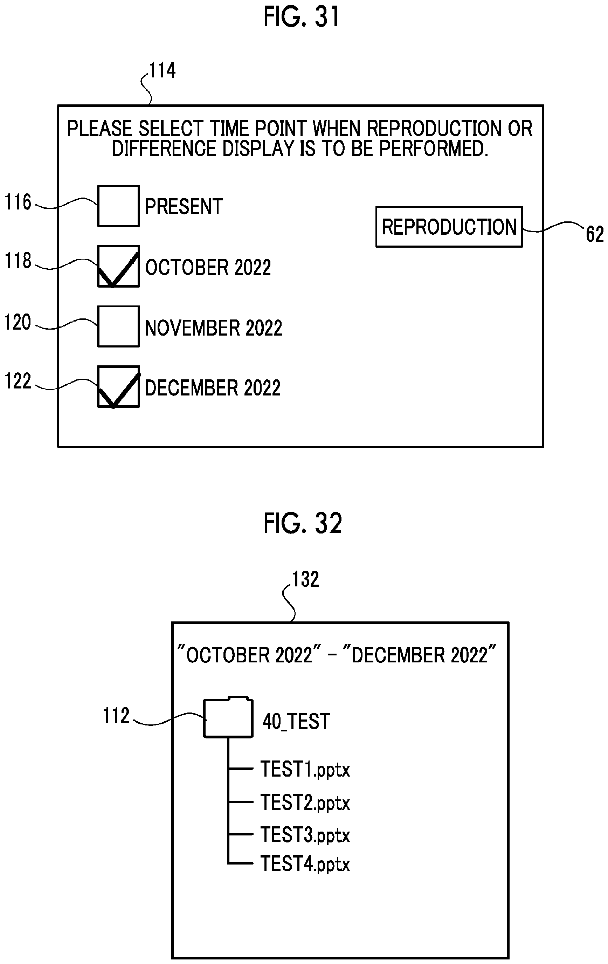

For example, the folder screen 110 shown in Fig. 26 is displayed on the display. In a case in which the user presses the reproduction button 40 on the folder screen 110, the processor 20 displays the selection screen 114 on the display of the UI 16 as shown in Fig. 31.

In the example shown in Fig. 31, the check boxes 118 and 122 are selected by the user. That is, "December 2022" and "October 2022" are selected as the specific time points by the user. In a case in which the reproduction button 62 is pressed in this state, the processor 20 acquires management information indicating the hierarchical structure in December 2022 and management information indicating the hierarchical structure in October 2022 from the storage device 12 and calculates the difference between the hierarchical structure in December 2022 and the hierarchical structure in October 2022. The processor 20 displays the calculated difference on the display.

Fig. 32 shows an example of the display of the difference. For example, the processor 20 displays a difference screen 132 on the display and displays the difference between the hierarchical structure in December 2022 and the hierarchical structure in October 2022 on the difference screen 132. The difference has a hierarchical structure.

The file "test1.ppxt", the file "test2.ppxt", the file "test3.ppxt", and the file "test4.ppxt" are stored in the folder "40_test" between October 2022 and December 2022.

For example, in a case in which the user designates the file "test1.pptx" on the difference screen 132, the processor 20 displays the operation menu screen 74 for the file on the display as shown in Fig. 10.

In a case in which the operation of "displaying the current location of the file" is designated by the user on the operation menu screen 74, the processor 20 specifies the current location of the file with reference to the file history information of the designated file "test1.pptx".

Fig. 29 shows an example of the display. The file "test1.pptx" is currently stored in the folder "41_tested script". Therefore, the processor 20 displays the icon 128 indicating the folder "41_tested script" on the screen 126. The file "test1.ppxt", the file "test2.ppxt", the file "test3.ppxt", and the file "test4.ppxt" are currently stored in the folder "41_tested script". The processor 20 displays the tree structure including the file "test1.ppxt", the file "test2.ppxt", the file "test3.ppxt", the file "test4.ppxt", and the folder "41_tested script" on the screen 126.

That is, the functions of the information processing apparatus 10 may be implemented by a single apparatus or by an information processing system including a plurality of apparatuses. That is, some functions of the information processing apparatus 10 may be implemented by another apparatus. In a case in which some of the functions of the information processing apparatus 10 are implemented by another apparatus, the information processing system may be constituted by the information processing apparatus 10 and another apparatus, and the above-described process may be performed by the entire information processing system. Further, a system may be constituted by the information processing apparatus 10 and the storage device 12, or a terminal apparatus operated by a user may be included in the system.

The functions of the information processing apparatus 10 are implemented, for example, in cooperation with hardware and software. For example, the processor 20 of the information processing apparatus 10 reads a program stored in the memory and executes the program to implement the functions of the information processing apparatus 10. The program is stored in the memory via a recording medium, such as a CD or a DVD, or via a communication path, such as a network.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

### (Supplementary Note)

(((1))) An information processing system comprising:
   a processor configured to:
   receive designation of a specific time point in a past from a user;
   display a first hierarchical structure that is a hierarchical structure of folders at the specific time point on a display;
   receive designation of a file or a folder in the first hierarchical structure from the user; and
   display a location of the received file or folder in a second hierarchical structure that is a current hierarchical structure on the display.
(((2))) The information processing system according to (((1))), wherein the processor is further configured to:
   display a difference between the first hierarchical structure and the second hierarchical structure on the display.
(((3))) The information processing system according to (((1))) or (((2))), wherein the processor is further configured to:
   restore the file that belongs to the second hierarchical structure and has been designated by the user to a folder in which the designated file was stored in the past.
(((4))) The information processing system according to (((3))), wherein the processor is configured to:
   receive selection of a folder that is a restoration destination from the user in a case in which the folder in which the designated file was stored in the past does not exist.
(((5))) The information processing system according to any one of (((1))) to (((4))),
   wherein, for each file, history information indicating a history of an operation on the file is associated with the file, and
   the processor is configured to:
      specify a location of the file in the second hierarchical structure on the basis of the history information.
(((6))) A program causing a computer to execute a process comprising:
   receiving designation of a specific time point in a past from a user;
   displaying a first hierarchical structure that is a hierarchical structure of folders at the specific time point on a display;
   receiving designation of a file or a folder in the first hierarchical structure from the user; and
   displaying a location of the received file or folder in a second hierarchical structure that is a current hierarchical structure on the display.

According to the information processing system according to (((1))), the information processing system according to (((5))), or the program according to (((6))), even in a case in which the hierarchical structure to which the file or the folder belongs has been changed or the file has been moved to another folder, it is possible to present the current location of the file to the user.

According to the information processing system according to (((2))), it is possible to present the user with the difference between the hierarchical structure at a specific time point in the past and the current hierarchical structure.

According to the information processing system according to (((3))), in the folder in which the designated file existed in the past, it is possible to operate the file.

According to the information processing system according to (((4))), even in a case in which the folder in which the designated file existed in the past does not exist, it is possible to operate the file in the folder that is the restoration destination selected by the user.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 10:: information processing apparatus
- 12:: storage device
- 20:: processor

## Claims

1. An information processing system comprising:
a processor configured to:
receive designation of a specific time point in a past from a user;
display a first hierarchical structure that is a hierarchical structure of folders at the specific time point on a display;
receive designation of a file or a folder in the first hierarchical structure from the user; and
display a location of the received file or folder in a second hierarchical structure that is a current hierarchical structure on the display.

2. The information processing system according to claim 1, wherein the processor is further configured to:
display a difference between the first hierarchical structure and the second hierarchical structure on the display.

3. The information processing system according to claim 1 or 2, wherein the processor is further configured to:
restore the file that belongs to the second hierarchical structure and has been designated by the user to a folder in which the designated file was stored in the past.

4. The information processing system according to claim 3, wherein the processor is configured to:
receive selection of a folder that is a restoration destination from the user in a case in which the folder in which the designated file was stored in the past does not exist.

5. The information processing system according to any one of claims 1 to 4,
wherein, for each file, history information indicating a history of an operation on the file is associated with the file, and
the processor is configured to:
specify a location of the file in the second hierarchical structure on the basis of the history information.

6. A program causing a computer to execute a process comprising:
receiving designation of a specific time point in a past from a user;
displaying a first hierarchical structure that is a hierarchical structure of folders at the specific time point on a display;
receiving designation of a file or a folder in the first hierarchical structure from the user; and
displaying a location of the received file or folder in a second hierarchical structure that is a current hierarchical structure on the display.

7. An information processing method comprising:
receiving designation of a specific time point in a past from a user;
displaying a first hierarchical structure that is a hierarchical structure of folders at the specific time point on a display;
receiving designation of a file or a folder in the first hierarchical structure from the user; and
displaying a location of the received file or folder in a second hierarchical structure that is a current hierarchical structure on the display.
